# EUROPEAN PATENT APPLICATION

(11) **EP 1 124 388 A2**
(43) Date of publication of application: **16.08.2001**
(21) Application number: 01300757.0
(22) Date of filing: 29.01.2001
(51) Int. Cl.: H04Q 7/24

(54) **Service provision while roaming in 3G wireless networks**

(30) Priority: 09.02.2000 US 501050
(71) Applicant: Lucent Technologies Inc., Murray Hill, New Jersey 07974-0636 (US)
(72) Inventor: Torabi, Mohammad, Dana Point, CA 92629 (US)
(74) Representative: Buckley, Christopher Simon Thirsk

(57) **Abstract**

The relay service control procedure enables network operators and/or service providers to provide home services to the visiting user, who is located in a visited serving network, when the visited serving network is not equipped to offer the home services. This is accomplished by enabling the visited serving network to expand their portfolio of available wireless services on an as needed basis. It obtains the needed Service Logic Program (SLP) from the Service Control Function of the user's home network or the Service Control Function of any other supporting network in the wireless communication system that supports the requested service. The visited serving network executes the relayed Service Logic Program in its Service Control Function and directly controls the provision of the requested service to the visiting user. The use of a supporting network for wireless telecommunication systems assists in the execution of the relay service control procedure to provide desired services to the mobile terminal users, directly through the inter-connection of the visited serving network with the supporting network. The network inter-connection is achieved by the use of a unique Network-to-Network Interface protocol that enables a supporting network operator to become a purveyor of third generation mobile telecommunications services to subscribers who are presently served by wireless communications networks that are incapable of providing these services.

## Description

### Field Of The Invention

This invention relates to wireless telecommunications systems and, in particular, to the concept of a relay service control procedure that enables network operators and/or service providers to provide home services to the visiting user, who is roaming in their networks. The assumption is that the visited (serving) networks are not readily equipped with the "Service Logic Program" to offer the home services.

### Problem

It is a problem in the field of wireless telecommunications systems for network operators and/or service providers to offer services that are not readily supported in their networks. The service may not be readily available in the visited serving network because it may not be economical for the visited serving network operator to provide the requested service, or the visited serving network may not be technically capable of providing the requested service on its own. In these instances, the roaming user is denied the service since the visited serving network operator does not support the service.

In existing 1^{st} and 2^{nd} Generation wireless networks, the subscriber service access authorization is processed every time a wireless mobile station is registered and a service request originates from this wireless mobile station. The service request is processed when a roaming user originates a request to the Mobile Switching Center of the visited serving network to register and place a request for service. The service request is denied if the requested service is not supported by the visited serving network. Therefore, existing wireless telecommunications systems are incapable of offering services that are not supported in the visited serving network.

### Solution

The above-described problems are solved and a technical advance is achieved by the relay service control procedure. The procedure enables network operators and/or service providers to provide home services to the visiting user, who is located in a visited serving network, when the visited serving network is not equipped to offer the home services. This is accomplished by enabling the visited serving network to expand their portfolio of available wireless services on an as needed basis. It obtains the needed Service Logic Program (SLP) from the Service Control Function of the user's home network or the Service Control Function of any other supporting network in the wireless communication system that supports the requested service. The visited serving network executes the relayed Service Logic Program in its Service Control Function and directly controls the provision of the requested service to the visiting user.

The use of a supporting network for wireless telecommunication systems assists in the execution of the relay service control procedure to provide desired services to the mobile terminal users, directly through the inter-connection of the visited serving network with the supporting network. The network inter-connection is achieved by the use of a unique Network-to-Network Interface protocol that enables a supporting network operator to become a purveyor of third generation mobile telecommunications services to subscribers who are presently served by wireless communications networks that are incapable of providing these services.

### Brief Description Of The Drawing

Figure 1 illustrates in block diagram form the architecture of a supporting network which is inter-connected with other wireless communications networks for third generation telecommunication systems (e.g., IMT-2000); and

Figures 2 - 4 illustrate the signal transactions among the various Functional Entities located in the wireless networks of Figure 1. The signal flows are used to execute the relay service control procedure and provide home services to the roaming users.

### Detailed Description Of The Drawings

### Definitions:

For the purpose of this description, the following definitions are provided for various terms that are used herein:

Wireless Communications Network is a wireless network comprised of base stations, base station control systems, and one or Mobile Switching Centers.

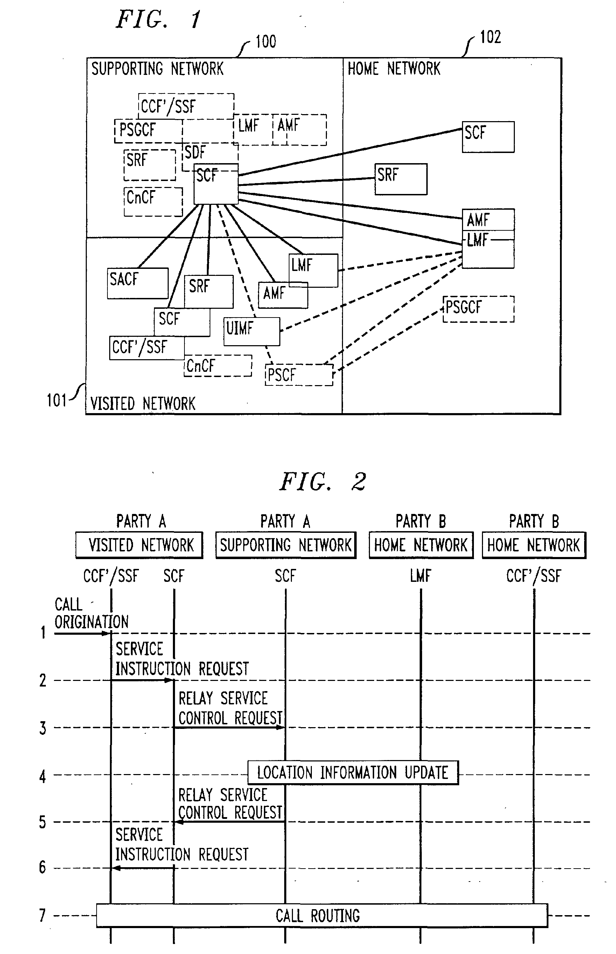

Home Network 102 as shown in Figure 1 is the wireless communications network which holds location and service profile information related to the subscriber.

Supporting Network 100 as shown in Figure 1 is the communications network (fixed or wireless) that provides support for a variety of services including but not limited to service logic programs and service related data for value added services (e.g., Intelligent Network and Supplementary Services.) Visited (Serving) Network 101 as shown in Figure 1 is the wireless communications network where a subscriber is presently being served.

Destination Network is the wireless communications network to which an outgoing call from a "calling party" is destined (e.g., a visited serving network for the "called party.")

Wireless Communications System is a system of Wireless Communications Networks (e.g., Home Networks, Supporting Networks, and Visited Networks).

### Supporting Network Inter-Connection

In the majority of 1^{st} and 2^{nd} Generation wireless networks, the notion of Service Provider and Network Operator are synonymous. However, due to increasingly expanding deregulated consumer market, it is anticipated that these two entities of the telecommunication industry are destined to evolve into independent entities. Figure 1 is the block diagram of the architecture of the proposed supporting network 100 as inter-connected with existing third generation telecommunication systems, consisting in this example of a visited network 101 and a home network 102. The network inter-connection is achieved by the use of a unique Network-to-Network Interface protocol that enables a supporting network operator to become a purveyor of third generation mobile telecommunications services to subscribers who are presently served by wireless communications networks that are incapable of providing these services.

The Functional Entities of Figure 1 are the existing components of a typical wireless communications system as described below. In this figure, the major Functional Entities (FE) that may be involved in inter-network communications are shown in solid circles (e.g., SCF, SRF, LMF, AMF, and SACF).

### Functional Entities of Wireless Communications Systems

There are a plurality of functional entities implemented in wireless communication systems, and the following are noted in the description (the terminology defining well known entities in accordance with ITU-T standards), and they are exemplary of the types of entities used for deployment of the supporting network:
- AMF: Authentication Management Function
- CCF: Call Control Function
- CnCF: Connection Control Function
- LMF: Location Management Function
- PSCF: Packet Service Control Function
- PSGCF: Packet Service Gateway Control Function
- SACF: Service Access Control Function
- SCF: Service Control Function
- SDF: Service Data Function
- SRF: Specialized Resource Function
- SSF: Service Switching Function
- UIMF: User Identification Module Function

### Information Flow Diagram

Figures 2, 3, and 4 illustrate in flow diagram form the operations of the relay service control procedure among the Home Network 102, the Supporting Network 100, and the Visited (Serving) Network 101 within the third generation wireless telecommunications system as illustrated in Figure 1. In particular, the mobile user unit can roam through a plurality of service are as which are included in a number of "networks", each of which is provisioned with a variety of services. The user (Party A) typically originates a wireless call from their present location in the Visited (Serving) Network 101 to a designated destination (Party B) in a Destination Network selecting one or more features and services that the subscriber is subscribed and/or authorized to receive for this call connection. The difficulty is where the mobile user unit transitions from one network ("Home Network" or "Old Visited Network") to a new Visited (Serving) Network, and discovers that the new serving network cannot support the services for which the mobile user has subscribed. The requested service may not readily be available in the new visited wireless communication network, or it may not be economical for the network to provide the requested service, or the visited network is not technically equipped with the Service Program Logic to provide the requested service. In these instances, the roaming user is denied the service, which the subscriber has contracted to receive.

The relay service control procedure overcomes this problem. It provides the desired service to the mobile user unit, either through the use of a resident capability in the Supporting Network 100 or the Home Network 102 or by acquiring the Service Logic Program and the subscriber data to execute the program and to offer the service. Three cases of the Relay Service Control procedures are illustrated in Figures 2, 3, and 4 and described below. These cases are "Call Related Relay Service Control", "Call Unrelated Relay Service Control", and "General Relay Service Control."

### Call Related Relay Service Control (Visited Network Triggered Service Request)

The information flows in Figure 2 show an example of a call related visited network triggered service request originated in the Visited Network 101. A detailed description of these flows is provided below.

### Signal Flow #1 (Call Origination)

The mobile users typically originate a wireless call from their present location in the Visited Network 101 to a designated destination in the Destination Network, (such as Home Network 102) selecting one or more features and services that the subscriber is subscribed and/or authorized to receive for this call connection. The call origination consists of a sequence of well known interactions between the user mobile station and a base station within the Visited (Serving) Network 101, which results in a service request being lodged in the Call Control Function/Service Switching Function (CCF)/(SSFv) of the Visited Network.

### Signal Flow #2 (Service Instruction Request)

Triggered by the Call Control Function/Service Switching Function CCF'/SSF in the Visited Network 101, this flow invokes the Service Control Function SCF in the Visited Network 101. This trigger is per instruction and information contained in the subscriber profile, and it could be detected from any active Trigger Detection Point encountered during a call processing.

### Signal Flow # 3 (Relay Service Control Request)

Initiated by the Service Control Function SCFv of the Visited Network 101, this flow is to the Service Control Function SCFsn of the Supporting Network 100 to request the Service Logic Program (SLP) needed to execute the service request received from the user. This signal flow carries information such as the user's identification, a service trigger identifier, a service logic identifier, the subscriber location information, and the like. The Service Control Function SCFsn of the Supporting Network 100 retrieves data residing in the Location Management Function LMFh of the Home Network 102.

### Signal Flow # 4 (Location Information Update)

This flow is from the Location Management Function LMFh in the Home Network 102 to the Service Control Function SCFsn in the Supporting Network 100 to provide the user location information.

### Signal Flow # 5 (Relay Service Control Response)

This signal flow is initiated by the Service Control Function SCFsn of the Supporting Network 100 to the Service Control Function SCFv of the Visited Network 101 to confirm receiving the request for the Service Logic Program (SLP). It also sends the Service Logic Program (SLP), or the segments of the Service Logic Program (SLP) necessary for the Visited (Serving) Network 101 to provide the requested service. In doing so, the Service Control Function SCFsn of the Supporting Network 100 updates the user's location and the state information for the user's mobile station, checks the subscriber service profile for restrictions on the subscriber, and formulates and transmits the requested Service Logic Program (SLP), or the segments of the Service Logic Program (SLP) to the Service Control Function SCFv of the Visited Network 101.

### Signal Flow # 6 (Service Instruction Response)

This flow is internal to the Visited Network 101 and carries instructions from the Service Control Function SCFv of the Visited Network 101 to the Call Control Function/Service Switching Function CCF'/SSF in the Visited Network 101 to transfer service instructions. Upon receiving the Service Logic Program (SLP) and related data, the Service Control Function SCFv of the Visited Network 101 executes the relayed Service Logic Program (SLP). When the result of executing the Service Logic Program (SLP) is to route the call, the Service Control Function SCFv of the Visited Network 101 transmits call routing instructions to the Call Control Function/Service Switching Function CCF'/SSF in the Visited Network 101.

### Signal Flow #7 (Call Routing)

This signal flow is a common procedure to continue the call processing and to connect the call to the destination network, Party B's Visited Network.

### Call Unrelated Relay Service Control (Visited Network Triggered Service Request)

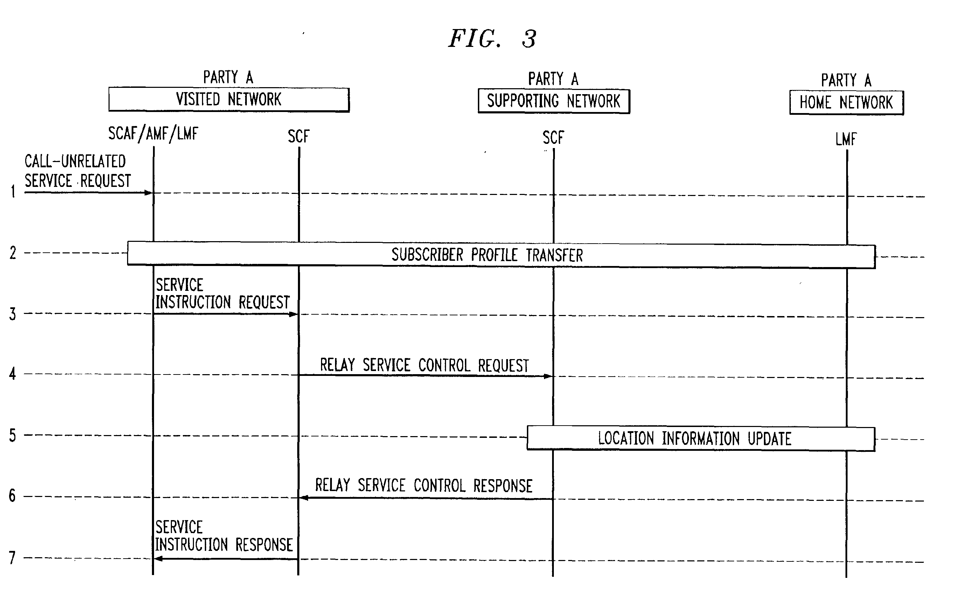

The information flows in Figure 3 show an example of a call unrelated visited network triggered service request that is originated in the Visited Network 101. In a Visited Network 101, an initial service request is transmitted to the Service Access Control Function SACFv of the Visited Network 101, the Location Management Function LMFv of the Visited Network 101, or the Authentication Management Function AMFv of the Visited Network 101 for a specific service. If the subscriber service profile has not already been retrieved, the receiving functional entity (e.g., SACF, LMF, or AMF) may send a request to the user's Home Network 102 for the subscriber service profile. When the initial service request is recognized by the receiving Functional Entity FE (e.g., SACF, LMF, or AMF), it also sends a query to the Service Control Function SCFv of the Visited Network 101 for instruction. The Service Control Function SCFv of the Visited Network 101, upon recognizing the need for the Service Logic Program (SLP) and after identifying the Supporting Network 100 for the service in question, sends a request for the Service Logic Program (SLP) to the Service Control Function SCFsn of the Supporting Network 100. The remaining steps of the relay service control process are similar to those described in the previous section. A description of these flows is provided below.

Signal Flow #1 (Call Unrelated Service Request) - This is the stimulus flow wherein a user's request for access to a designated service is transmitted to the appropriate Functional Entity FE (e.g., SACFv, LMFv, or AMFv) in the Visited Network 101. If the subscriber service profile has not already been retrieved, the Functional Entity FE in the Visited Network 101 transmits a request to the user's Home Network 102 for the subscriber service profile, otherwise the Functional Entity FE in the Visited Network 101 transmits a request for instructions to the Service Control Function SCFv of the Visited Network 101.

Signal Flow #2 (Subscriber Profile Transfer) - This signal flow is a common procedure to obtain information on the subscriber's service authorizations, based on the subscriber service profile.

Signal Flow #3 (Service Instruction Request) - Triggered by either the Service Access Control Function SACFv of the Visited Network 101, the Location Management Function LMFv of the Visited Network 101, or the Authentication Management Function AMFv of the Visited Network 101, this flow invokes the Service Control Function SCFv in the Visited Network 101fror instruction to handle the service request.

Signal Flow #4 (Relay Service Control Request) - A message is transmitted from the Service Control Function SCFv in the Visited Network 101 to the Service Control Function SCFsn in the Supporting Network 100 requesting the Service Logic Program (SLP) that is needed. The message contains the subscriber identification, the service trigger identifier, and a pointer of identifier for the requested Service Logic Program (SLP).

Signal Flow #5 (Location Information Update) - This flow is a common procedure containing message transactions between the Location Management Function LMFh in the Home Network 102 and the Service Control Function SCFsn in the Supporting Network 100 to provide an update of the user location information.

Signal Flow #6 (Relay Service Control Response) - This signal flow is initiated by the Service Control Function SCFsn of the Supporting Network 100 to the Service Control Function SCFv of the Visited Network 101 to confirm receiving the request for the Service Logic Program (SLP) and to send the requested Service Logic Program (SLP), or the segments of the Service Logic Program (SLP) necessary for the Visited Network 101 to provide the requested service. In doing so, the Service Control Function SCFsn of the Supporting Network 100 updates the subscriber's location and the state information for the subscriber's mobile subscriber station, checks for restrictions on the subscriber, formulates the requested Service Logic Program (SLP), or the segments of the Service Logic Program (SLP) necessary for the Visited Network 101 to provide the requested service, and transmits the Service Logic Program (SLP) to the Service Control Function SCFv of the Visited Network 101.

Signal Flow # 7 (Service Instruction Response) - This signal flow is directed to the Functional Entity of the Visited (Serving) Network 101 (e.g., Service Access Control Function SACFv, the Location Management Function LMFv, or the Authentication Management Function AMFv) that originated the request for instruction to handle the service.

### General Relay Service Control Procedure

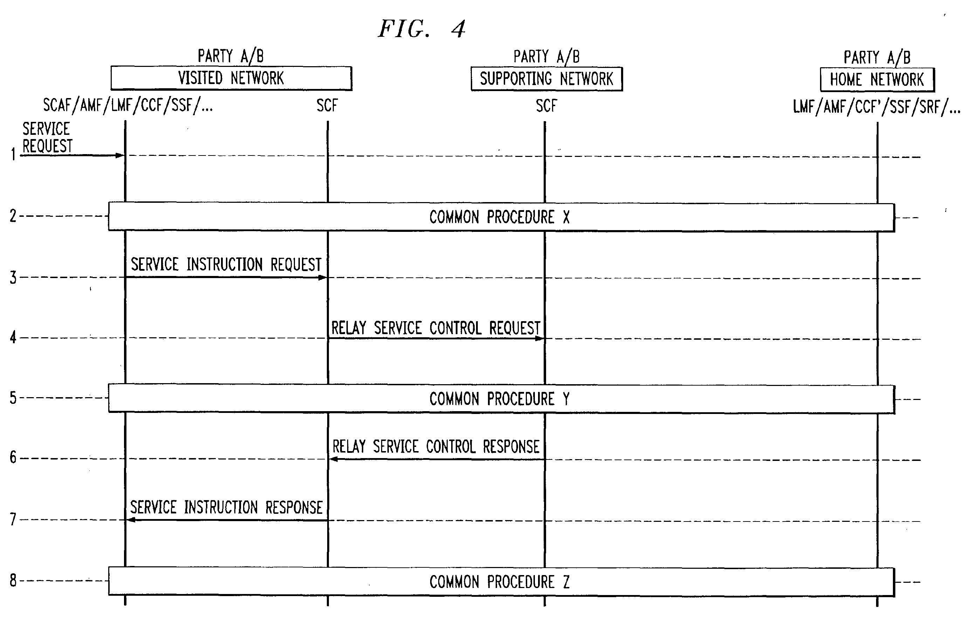

The information flows in Figure 4 show an example of a general "relay service control" request to the Visited Network 101.

In a Visited Network 101, an initial service request is transmitted to a Functional Entity FE in the Visited Network 101, such as the Service Access Control Function SACFv of the Visited Network 101, the Location Management Function LMFv of the Visited Network 101, or the Authentication Management Function AMFv of the Visited Network 101, for a specific service. This FE sends a request for instruction to the service control function SCFv of Visited (Serving) Network 101. Unequipped with the required Service Logic Program, the SCFv sends a request to the Service Control Function SCFsn of the Supporting Network 100. When the requested Service Logic Program (SLP) is received, the Service Control Function SCFv of the Visited Network 101 upon processing the requested Service Logic Program (SLP), sends instructions to the original requesting Functional Entity FE. The generic aspect of this procedure is the use of two data flows from the Service Control Function SCFv of the Visited Network 101 to the Service Control Function SCFsn in the Supporting Network 100, and vice versa. As with the two prior examples, a pre-arrangement exists between the Supporting Network 100 and the Visited Network 101 for relaying the requested Service Logic Program (SLP), which can be security/screening capabilities, shared service logic programs and the like. A description of these flows is provided below.

Signal Flow #1 (Service Request) - This is the stimulus flow wherein a subscriber's request for access to a designated service is transmitted to the Functional Entity FE in the Visited Network 101 (e.g., SACFv, LMFv, AMFv). If the subscriber's service profile has not already been retrieved, the Functional Entity FE in the Visited Network 101 transmits a request to the user's Home Network 102 for the subscriber service profile, otherwise the Functional Entity FE in the Visited Network 101 transmits a request for instructions to the Service Control Function SCFv of the Visited Network 101.

Signal Flow #2 (Common Procedure X) - This signal flow is a common procedure to obtain information on the subscriber's service authorizations, based on the subscriber service profile.

Signal Flow #3 (Service Instruction Request) - Triggered either by the Service Access Control Function SACFv of the Visited Network 101, the Location Management Function LMFv of the Visited Network 101, or the Authentication Management Function AMFv of the Visited Network 101, this flow invokes the Service Control Function SCFv in the Visited Network 101 for instruction to handle the service request.

Signal Flow #4 (Relay Service Control Reouest) - A message is transmitted from the Service Control Function SCFv in the Visited Network 101 to the Service Control Function SCFsn in the Supporting Network 100, requesting the Service Logic Program (SLP) that is needed for execution. The message contains the subscriber identification, the service trigger identifier, and a pointer to the requested Service Logic Program (SLP).

Signal Flow #5 (Common Procedure Y) - This flow is from the Location Management Function LMFh in the Home Network 102 to the Service Control Function SCFsn in the Supporting Network 100 to provide information/update on the location of the calling party (Party A) and the called party (Party B).

Signal Flow #6 (Relay Service Control Response) - This signal flow is initiated by the Service Control Function SCFsn of the Supporting Network 100 to the Service Control Function SCFv of the Visited Network 101 in response to the request for the Service Logic Program (SLP). It contains the Service Logic Program (SLP), or the segments of the Service Logic Program (SLP) that is necessary for the Visited Network 101 to provide the requested service. In doing so, the Service Control Function SCFsn of the Supporting Network 100 updates the user's location and the state information for the user's mobile station, checks the subscriber service profile for restrictions on the subscriber, and formulates and sends the requested Service Logic Program (SLP) (or the segments of the Service Logic Program (SLP)), to the Visited Network 101.

Signal Flow # 7 (Service Instruction Response) - This signal flow is directed to either the Service Access Control Function SACFv of the Visited Network 101, the Location Management Function LMFv of the Visited Network 101, or the Authentication Management Function AMFv of the Visited Network 101 that originated the service request and provides the service handling instruction.

Signal Flow #8 (Common Procedure Z) - This signal flow is a common procedure used to continue the processing of the call after receiving instructions from the Service Control Function SCFv of the Visited Network 101.

In the above-described process, the common procedures vary in number, their information content and the range of transactions for their corresponding end-to-end Functional Entities FEs.

### Summary

The relay service control procedure enables a visited serving network to expand its portfolio of available wireless services on an as needed basis by obtaining the needed Service Logic Program (SLP) from the Service Control Function of the user's home network or the Service Control Function of any other supporting network that supports the requested service. The visited serving network executes the Service Logic Program in its Service Control Function and directly controls the provision of the requested service to the user.

## Claims

1. A relay service control function for providing a selected communication service to a user whose mobile subscriber terminal is operational in a visited wireless telecommunication network, where the visited network cannot provide said communication service requested by said user and the visited network transmits a message from said visited network, designating said requested service, to a home network or a supporting network of said user, comprising:
means, in said home network of said subscriber responsive to receipt of said message, for retrieving a subscriber service profile for said user from a home location register of said subscriber;
means for determining authorization to execute said communication service, based on said service profile for said user and said communication service; and
means, in said home network, for transmitting data to said visited network to execute said communication service.

2. The relay service control function of claim 1 further comprising:
means, responsive to said service request, for identifying service logic program to implement said requested service.

3. The relay service control function of claim 2 further comprising:
means for transferring service instructions, comprising said service logic program to implement said requested service, to a Service Function located in said Visited Network.

4. The relay service control function of claim 1 wherein said home network is connected to at least one visited network comprising:
at least one of: 1^{st} Generation wireless communications network, 2^{nd} Generation wireless communications network, 3^{rd} Generation wireless communications network, and wireline network.

5. The relay service control function of claim 1 wherein said home network provides said requested service to user terminals comprising:
at least one of: fixed, mobile, and cordless terminals.

6. The relay service control function of claim 1 wherein both said home and visited networks are of fixed network type, and roaming users make service requests through fixed terminals.

7. A relay service control method for providing a selected communication service to a user whose mobile terminal is operational in a visited wireless telecommunication network, where the visited network cannot provide said communication service requested by said subscriber and the visited network transmits a message from said visited network, designating said requested service, to a home network or a supporting of said user, comprising the steps of.
retrieving in said home network of said subscriber responsive to receipt of said message, a service profile for said user from a home location register of said subscriber;
determining authorization to execute said communication service, based on said subscriber service profile for said user and said communication service; and
transmitting data to said visited network to execute said communication service.

8. The relay service control method of claim 7 further comprising the step of:
identifying, in response to said service request, service logic program to implement said requested service.

9. The relay service control function of claim 8 further comprising the step of:
transferring service instructions, comprising said service logic program to implement said requested service, to a Service Function located in said Visited Network.

10. The relay service control method of claim 7 wherein said step of transmitting comprises:
interfacing said home network to at least one visited network comprising at least one of: 1^{st} Generation wireless communications network, 2^{nd} Generation wireless communications network, 3^{rd} Generation wireless communications network, and wireline network.

11. The relay service control method of claim 7 further comprising:
providing in said home network said requested service to subscriber terminals comprising at least one of: fixed, mobile, and cordless terminals.

12. The relay service control method of claim 7 wherein both said home and visited networks are of fixed network type, said roaming users make service requests through fixed terminals.
